# EUROPEAN PATENT SPECIFICATION

(11) **EP 4 361 702 B1**
(45) Date of publication and mention of the grant of the patent: **17.09.2025**
(21) Application number: 22886396.5
(22) Date of filing: 12.07.2022
(51) Int. Cl.: G02B 21/34, G01N 1/28, G01N 1/31, G01N 35/00, G01N 1/36

(54) **COVER SLIP STICKING DEVICE**
VORRICHTUNG ZUM KLEBEN EINES DECKGLASES
DISPOSITIF DE COLLAGE DE COUVRE-OBJET

(30) Priority: 29.10.2021 JP 2021177161
(43) Date of publication of application: 01.05.2024
(73) Proprietor: SAKURA SEIKI CO., LTD., Chikuma-shi Nagano 387-0015 (JP); SAKURA FINETEK JAPAN CO., LTD., Chuo-ku Tokyo 103-0023 (JP)
(72) Inventor: MIMURA, Masahisa, Chikuma-shi, Nagano 387-0015 (JP); HASHIZUME, Daiki, Chikuma-shi, Nagano 387-0015 (JP); OKADA, Hoshinosuke, Chikuma-shi, Nagano 387-0015 (JP)
(74) Representative: Purdylucey Intellectual Property
(86) International application number: PCT/JP2022/027337
(87) International publication number: WO 2023/074059

(56) References cited:
- JP-A- 2005 300 323
- JP-A- 2010 503 039
- US-A1- 2009 098 646
- US-A1- 2010 099 199

## Description

### Technical Field

The present invention relates to a cover slip sticking device that sticks a cover slip (a cover film or a cover glass) on a slide glass to which a specimen is attached.

### Background Art

In pathological examinations, after a specimen obtained by slicing a biological material is attached to a slide glass and dyeing processing is performed, a cover slip which is the cover film or the cover glass is stuck on the surface of the slide glass for protecting the specimen and observed by a microscope.

A device for sticking a cover glass as an example of the cover slip on the surface of the slide glass is disclosed in PTL 1.

In the cover glass sticking device disclosed in PTL 1, a dipping bath storing a clearing agent such as xylene is provided. A basket which houses a plurality of slide glasses to which the specimens are attached is dipped in the dipping bath to prevent drying of the specimen.

In the cover glass sticking device, after the basket is pulled out from the dipping bath, the slide glasses are taken out from the basket one by one and a sealing agent is dropped to the slide glass to stick the cover glass, thereby creating a microscopic specimen in which the specimen is sealed by the cover glass.

Note that, a cover film sticking device that sticks the cover film, not the cover glass, is also provided with the dipping bath storing the clearing agent such as xylene as shown in PTL 2. A basket which houses a plurality of slide glasses to which the specimens are attached is dipped in the dipping bath to prevent drying of the specimen.

US Patent Application with publication number US 2009/0098646 Al titled "STAINING AND STICKING SYSTEM" discloses a staining and sticking system including a dipping bath in which a basket housing a plurality of slide glasses is housed. Document US2009/098646 includes a structure in which, upon placement of the basket, the basket presses the lower-end portion of the strip-shaped member disposed in an inclining manner, and the two sensors detect motion of the strip-shaped member. The two sensors are described as capable of determining differences in the size and presence/absence of a basket.

### Citation List

### Patent Literature

PTL 1: JP-A-2001-337280
PTL 2: JP-A-2005-300323

### Summary of Invention

### Technical Problem

The dipping bath is provided so as to be taken out from the cover slip sticking device. In the dipping bath taken out from the cover slip sticking device, the basket which houses a plurality of slide glasses is housed and the clearing agent such as xylene is stored. The dipping bath which houses the clearing agent and the basket is returned to the cover slip sticking device, and sticking operation of the cover slip is performed.

On the other hand, a system for checking the presence/absence of the dipping bath or the condition thereof is not provided in a related-art cover slip sticking device.

Therefore, even when the dipping bath is not set in the cover slip sticking device or when the dipping bath is not in a state where the sticking operation of the cover slip can be performed, it is difficult to check such state after an operator closes a door. There is thus a problem that it is desired to check the presence/absence of the dipping bath and the condition of the dipping bath.

### Solution to Problem

The present invention has been made for solving the above problem, and an object thereof is to provide a cover slip sticking device capable of checking the presence/absence of the dipping bath and the condition of the dipping bath.

A cover slip sticking device according to the present invention includes the features of claim 1.

According to the above structure, the presence/absence of the dipping bath and the condition of the dipping bath are checked by the imaging device, and the checked status are notified to the operator. Therefore, the operator can determine whether a sticking operation is executed or not after the presence/absence of the dipping bath and the condition of the dipping bath are checked.

The cover slip sticking device includes an image processing device performing image processing of an image taken by the imaging device, in which the image processing device determines the presence/absence of a lid of the dipping bath and the presence/absence of a basket receiver arranged in the dipping bath as the condition of the dipping bath.

According to the above structure, it is possible to prevent damage of a part due to the sticking operation performed in a state where the lid is attached to the dipping bath or in a state where there is not the basket receiver.

The cover slip sticking device includes an image processing device performing image processing of an image taken by the imaging device, in which the image processing device determines a volume of the clearing agent as the condition of the dipping bath.

According to the above structure, it is possible to prevent drying of the specimen due to the sticking operation performed in a state where the volume of the clearing agent is small.

The cover slip sticking device includes an image processing device performing image processing of an image taken by the imaging device, in which the image processing device determines the presence/absence of a basket as the condition of the dipping bath.

According to the above structure, needless action and waste of time for seeking a basket that does not exist in the dipping bath can be saved, and it is possible to immediately notify the operator of the absence of the basket.

The image processing device determines a type of a size of the basket according to the difference in the number of slide glasses inserted in the basket.

Conventionally, a detection board to be pressed by the basket housed in the dipping path is provided for determining the type of the size of the basket, and a movement of the detection board pressed by the basket is detected by a sensor to thereby determine the type of the basket. However, it is not necessary to provide the dedicated detection board or the sensor for detecting the movement of the detection board according to the above structure, which can reduce costs.

The notification unit may include a display unit on which the presence/absence of the dipping bath and the condition of the dipping bath are displayed.

According to the above structure, the operator can visually check the presence/absence of the dipping bath and the condition of the dipping bath.

The notification unit may also include a speaker generating a notification sound or voice.

According to the above structure, the operator can aurally check the presence/absence of the dipping bath and the condition of the dipping bath.

### Advantageous Effects of Invention

According to the cover slip sticking device of the present invention, the presence/absence of the dipping bath and the condition of the dipping bath can be checked.

### Brief Description of Drawings

Fig. 1 is an explanatory view showing a schematic internal structure of a cover film sticking device.
Fig. 2 is a perspective view showing an external structure of a dipping bath with a lid.
Fig. 3 is a perspective view showing an external structure of the dipping bath without a lid.
Fig. 4 is a block diagram of a camera and an image processing device.
Fig. 5 is an explanatory view showing a schematic internal structure of a cover glass sticking device.
Fig. 6 is a plan view showing a schematic internal structure of the cover glass sticking device.

### Description of Embodiments

### (First Embodiment)

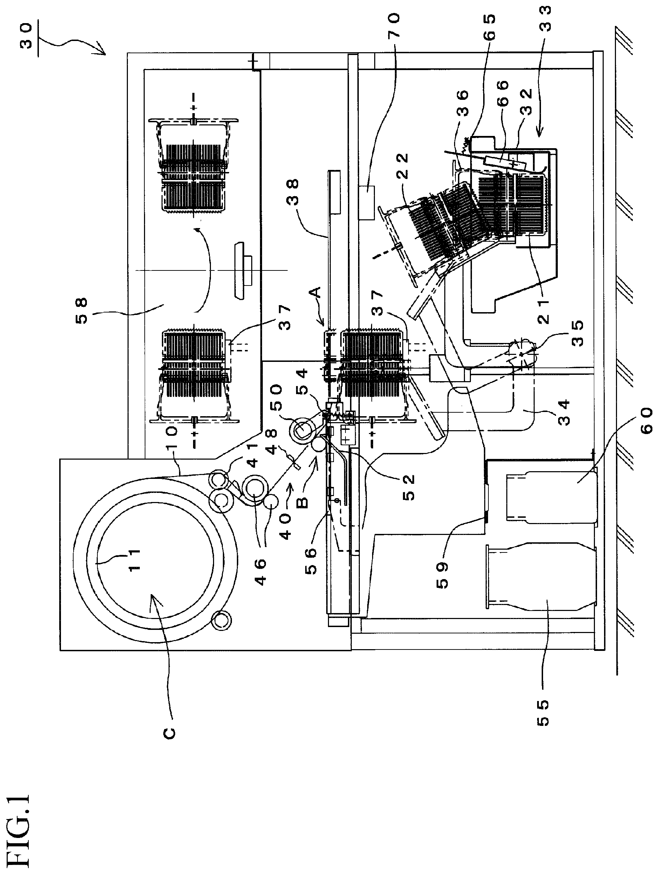

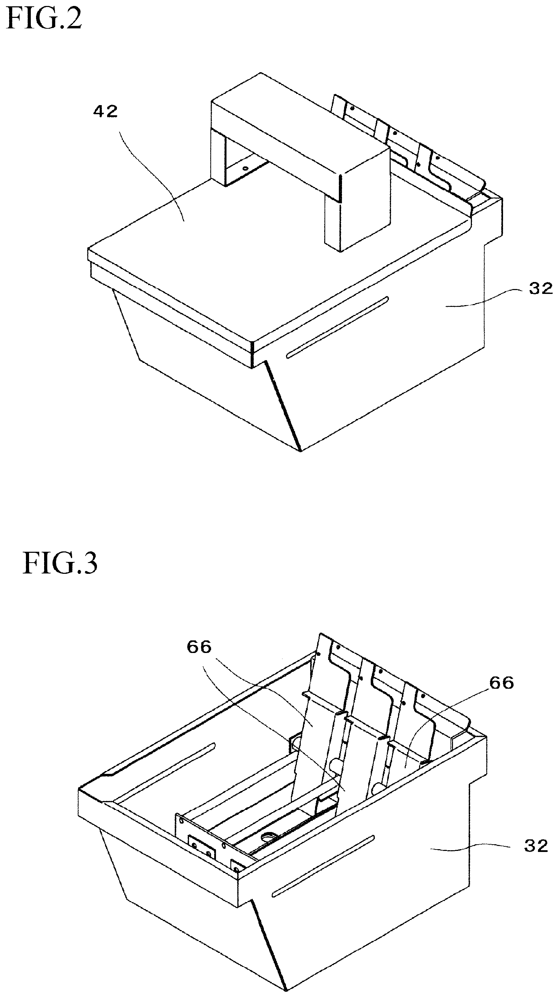

Fig. 1 shows a schematic internal structure of a cover film sticking device as an example of a cover slip sticking device. Fig. 2 shows a perspective view of a dipping bath in a state where a lid is provided. Fig. 3 shows a perspective view of the dipping bath without a lid.

A cover film sticking device 30 has a dipping bath arrangement part 33 where a dipping bath 32 storing a clearing agent is arranged. The cover film sticking device 30 is provided with a not-shown door on a front side in Fig. 1, and an operator can take out the dipping bath 32 from the cover film sticking device 30 by opening the door.

A lid 42 of the dipping bath 32 covers the top of the dipping bath 32 to thereby prevent volatilization of xylene which is a clearing agent stored in the dipping bath 32. When the dipping bath 32 is arranged inside the cover film sticking device 30, the lid 42 is removed from the dipping bath 32.

The operator pours the clearing agent such as xylene into the dipping bath 32 taken out from the cover film sticking device 30 and houses a basket 21 which houses a plurality of slide glasses 22 to which specimens are attached in the dipping bath 32.

The basket 21 has a shape in which the plural slide glasses 22 to which sliced specimens are attached are inserted and housed so as to be perpendicular to a bottom surface part. The slide glasses 22 are housed inside the dipping bath 32 in a state of being housed in the basket 21 to be dipped in the clearing agent. A basket which differs in storage capacity of the slide glasses 22 exists as the basket 21. Hereinafter, a kind of the basket which differs in capacity is called a type of the basket.

The dipping bath 32 is provided with a basket receiver 66. The basket receiver 66 is a member provided for positively holding the basket 21 inside the dipping bath 32 even when the basket 21 is a different type.

The basket receiver 66 is arranged to be slanted when seen from the front in Fig. 1 in such a manner as to protrude in an inward direction of the dipping bath 32 by being biased by a biasing member 65. It is not always necessary to provide the biasing member 65 depending on the shape of the basket receiver 66.

When the basket 21 is housed in the dipping bath 32, one end of the basket 21 pushes the basket receiver 66 to hold the basket 21 due to a biasing force of the biasing member 65 of the basket receiver 66. However, the basket 21 can be held even when the biasing member 65 is not provided depending on the shape of the basket receiver 66 as described above.

Although three members with the same shape are provided in parallel as the basket receivers 66 in the embodiment shown in Fig. 2 and Fig. 3, it is not particularly limited to three members.

The cover film sticking device 30 includes a take-out arm 34 for taking out the basket 21 from the dipping bath 32. The take-out arm 34 is provided with a gripping part 36 for gripping the basket 21 at a tip end, turning on a vertical plane around a pivot shaft 35 directed in a horizontal direction and taking out the basket 21 from the dipping bath 32.

The take-out arm 34 turns at 90 degrees on the vertical plane and turns to a position where the slide glasses 22 in the basket 21 taken out from the dipping bath 32 are in a horizontal position.

The basket 21 turning to the position where the slide glasses 22 are in the horizontal position is placed on a lifting base 37 lifting and lowering in upward and downward directions. The lifting base 37 lifts the basket 21 to a standby position (symbol A in Fig. 1).

In the standby position, a push ejector 38 pushing out the slide glasses 22 from the basket 21 one by one is provided.

The push ejector 38 pushes out the slide glass 22 from the basket 21 and moves the slide glass 22 to a sealing section B on a horizontal table.

A cover film 10 is stuck on the slide glass 22 in the sealing section B, where the specimen of the slide glass 22 is sealed.

The cover film 10 is wound around a holder 11 as described above and is mounted on a holding section C on which the holder 11 is mounted.

The cover film 10 is drawn out from the side of the holder 11 and enters a cutting device 40 via a guide roller 41 and a feed roller 46. The guide roller 41 is not always necessary depending on the arrangement of the cutting device 40 and the holding section C.

The cover film 10 can enter the cutting device 40 after being drawn around the holding section C for sealing guarantee, though not shown in Fig. 1. The sealing guarantee is made so that a distance drawn around the holding section C corresponds to the number of slide glasses housed in one basket 21, the cover film 10 can be stuck on the slide glasses 22 at least in one basket 21 even when the cover film 10 wound around the holder 11 runs out.

The cutting device 40 is placed at an angle so as to be approached from diagonally above to the slide glass 22 arranged in the sealing section B, which includes a cutter 48 that cuts the cover film 10 in a predetermined length and a pair of cover rollers 50 that feeds the cover film 10 cut in the predetermined length onto the slide glass 22.

A dispensing nozzle (not shown) for dropping a sealing agent is provided in the sealing section B. The dispensing nozzle is connected to a pump and a pipe, sucking up the sealing agent from a solvent bottle 55 through the not-shown pump and the pipe. A tip end of the dispensing nozzle is arranged above the specimen on the slide glass 22 arranged in the sealing section B, and the sealing agent can be dropped to an upper face of the specimen.

The cover film 10 cut in the prescribed length by the cutter 48 is stuck on the slide glass 22 by a sticking roller 54.

The slide glass 22 to which the cover film 10 has been stuck is moved in the horizontal direction so as to be housed in an original position in the basket 21 by a return ejector 56.

When sticking of the cover film 10 to a piece of slide glass 22 is completed, the lifting base 37 lifts the basket 21 for a thickness of a piece of slide glass 22. Then, a next slide glass 22 to which the cover film 10 is not stuck yet is pushed out from the basket 21 to the sealing section B, and the cover film 10 is stuck.

When sticking of the cover film 10 on all the slide glasses 22 in the basket 21 is completed, the lifting base 37 moves upward and houses the basket 21 in a housing part 58 where the basket 21 after sticking the cover film is housed.

The sealing agent and so on overflowed from the slide glass 22 fall into a waste liquid tray 59 arranged below the sealing section B and are gathered there to be stored in a waste liquid bottle 60 arranged below the waste liquid tray 59.

A camera 70 which is an imaging device for imaging the dipping bath 32 from above is provided above the dipping bath 32. A digital camera having a CCD imaging sensor or a CMOS imaging sensor is used as the camera 70 so that data processing can be performed to taken images.

The arrangement position of the camera 70 is not limited to just above the dipping bath 32 but may be arranged at a diagonally upward position of the dipping bath 32.

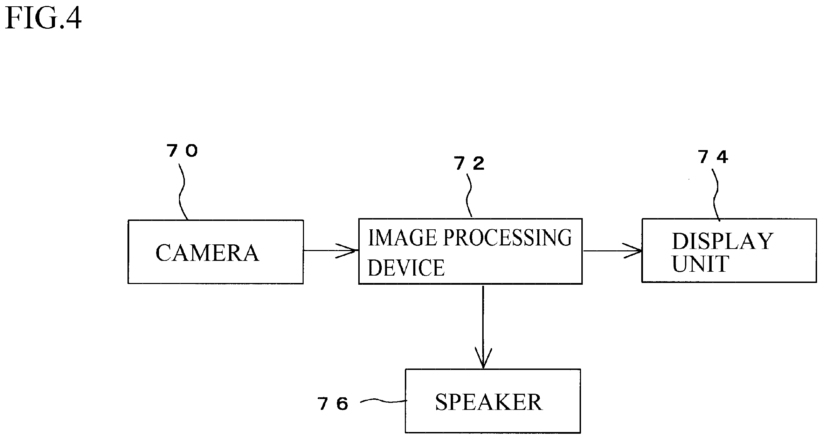

Fig. 4 shows a block diagram relating to execution of image processing by the camera.

The camera 70 is connected to an image processing device 72. The camera 70 transmits taken image data to the image processing device 72.

A display unit 74 and a speaker 76 for notifying the operator of a determination result are connected to the image processing device 72, and the image processing device 72 also has functions of performing display control to the display unit 74 and sound output control to the speaker 76.

The image processing device 72 can determine the presence/absence of the dipping bath 32 in the dipping bath arrangement part 33, the presence/absence of the lid 42 of the dipping bath 32, the presence/absence of the basket receiver 66 arranged in the dipping bath 32, the presence/absence of the basket 21, a type of the basket, a volume of the clearing agent in the dipping bath 32 on the basis of image data taken by the camera 70.

The image processing device 37 is a device which can analyze and measure image data taken by the camera 70 and can also extract a feature of an object. The image processing device 37 is formed of a CPU that is a processor executing image processing operation and a memory, and the CPU is operated by software. As the processor executing image processing operation, a GPU that is a processor dedicated to image processing may be used, or a combination of the CPU and the GPU may also be used.

When the image processing device 72 determines that there is not the dipping bath 32 regarding the presence/absence of the dipping bath 32 in the dipping bath arrangement part 33 on the basis of image data taken by the camera 70, the image processing device 72 displays the absence of the dipping bath on the display unit 74 and outputs an alarm sound such as a beeping sound from the speaker 76.

Moreover, when the image processing device 72 determines that there is the lid 42 regarding the presence/absence of the lid 42 of the dipping bath 32 on the basis of image data taken by the camera 70, the image processing device 72 displays the presence of the lid on the display unit 74 and outputs the alarm sound such as the beeping sound from the speaker 76.

Moreover, when the image processing device 72 determines that there is not the basket receiver 66 regarding the presence/absence of the basket receiver 66 of the dipping bath 32 on the basis of image data taken by the camera 70, the image processing device 72 displays the absence of the basket receiver on the display unit 74 and outputs the alarm sound such as the beeping sound from the speaker 76.

Moreover, when the image processing device 72 determines that there is not the basket 21 regarding the presence/absence of the basket 21 in the dipping bath 32 on the basis of image data taken by the camera 70, the image processing device 72 displays the absence of the basket on the display unit 74 and outputs the alarm sound such as the beeping sound from the speaker 76.

The image processing device 72 can determine the type of the basket on the basis of image data taken by the camera 70. The image processing device 72 displays the determined type on the display unit 74. It is also preferable that the type of the basket is notified by voice from the speaker 76.

Furthermore, the image processing device 72 determines whether the volume of the clearing agent stored in the dipping bath 32 is sufficient or not so that the specimen is not dried on the basis of image data taken by the camera 70. Specifically, the image processing device 72, when determining that a liquid level of the clearing agent in the dipping bath 32 is lower than a position set in advance, performs a display indicating that the volume of the clearing agent is not sufficient on the display unit 74 and outputs the alarm sound such as the beeping sound from the speaker 76.

The sound outputted from the speaker 76 is not limited to the alarm sound but may be voice synthesized in advance. In this case, voice data for notifying the abnormality specifically such as "there is not the dipping bath", "there is the lid", "there is not the basket receiver", "there is not the basket", or "the clearing agent is insufficient" is outputted from the speaker 76.

It is necessary to perform the voice output when the type of the basket is outputted from the speaker 76.

The function of notifying the operator of the condition concerning the dipping bath 32 may be provided in either the display unit 74 or the speaker 76.

### (Second Embodiment)

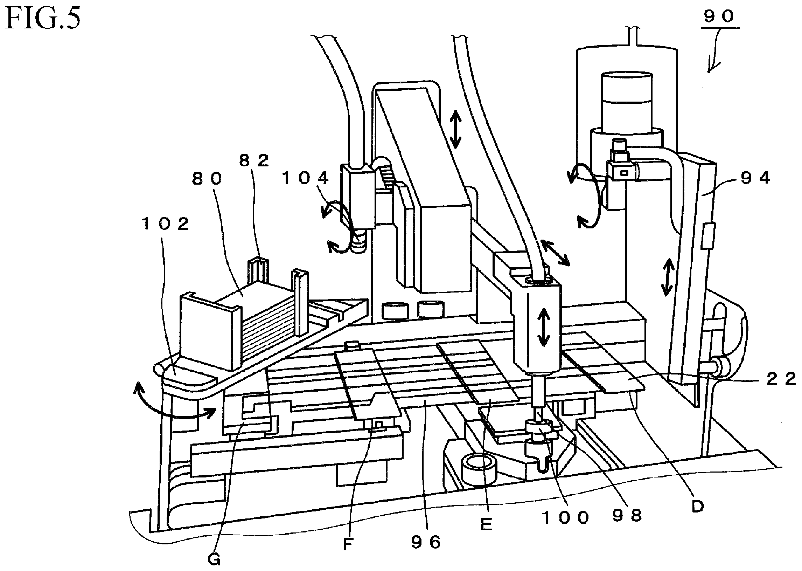

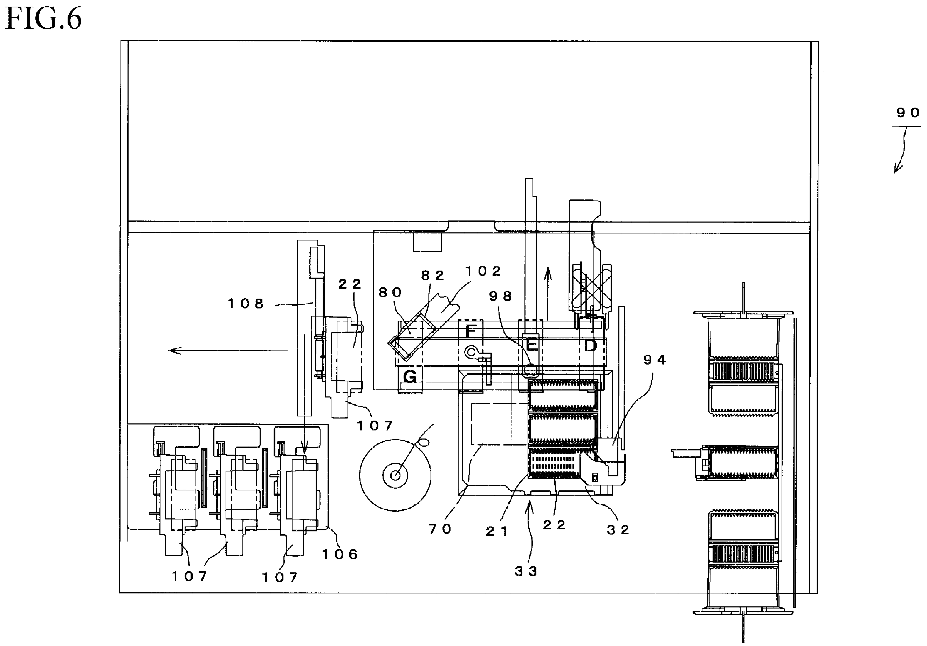

Fig. 5 shows a schematic internal structure of a cover glass sticking device which adopts the cover glass as the cover slip. Fig. 6 shows a plan view of the cover glass sticking device which adopts the cover glass as the cover slip when seen from above.

A cover glass sticking device 90 is provided with the dipping bath 32 in which the clearing agent is stored. A plurality of slide glasses 22 to which sliced specimens are attached are housed in the basket 21. The basket 21 has a shape in which the plural slide glasses 22 to which sliced specimens are attached are inserted and housed so as to be perpendicular to the bottom surface part. The slide glasses 22 are housed inside the dipping bath 32 in a state of being housed in the basket 21 to be dipped in the clearing agent.

A take-out mechanism unit 94 for pulling up the slide glasses 22 upward from the basket 21 is arranged at an upper part of the dipping bath 32. The take-out mechanism unit 94 moves upward while holding an upper edge of the slide glass 22 and rotates the slide glass 22 horizontally after moving upward in a predetermined height to arrange the slide glass 22 in a first station D.

That is, the present embodiment differs from the first embodiment in a point that the slide glass 22 is taken out without taking out the basket 21 from the dipping bath 32.

The first station D is provided at a start position in a traveling direction of the slide glass 22 in a conveying device 96. The conveying device 96 conveys the slide glass 22 in an order of the first station D, a second station E, a third station F and a fourth station G.

In the second station E, a dispensing nozzle 98 for dispensing a sealing agent or a solvent for dissolving the sealing agent previously applied to the cover glass to the slide glass 22 is provided. A tip end of the dispensing nozzle 98 is inserted into a container 100 that contains a solvent preventing solidification of the sealing agent.

The third station F is a place where a cover glass 80 is stuck on the slide glass 22.

A mounting part 102 on which a holder 82 housing the cover glasses 80 is placed is provided above the third station F. A suction pad 104 that sucks and holds the cover glass 80 is provided above the third station F at a higher position than the mounting part 102.

In the third station F, the suction pad 104 sucks and holds a piece of cover glass 80 and moves downward to stick the cover glass 80 on the slide glass 22 placed on the third station F.

The fourth station G is a station where the slide glass 22 on which the cover glass 80 is stuck is placed and for housing the slide glass 22 on which the cover glass 80 is stuck in a housing rack 107.

On a downstream side in a conveying direction of the fourth station G, a housing mechanism unit 108 that holds the housing rack 107 and houses the housing rack 107 in a housing part 106 is provided.

The housing mechanism unit 108, after housing the slide glass 22 in the housing rack 107 at the fourth station G, moves to the downstream side in the conveying direction. Then, the housing mechanism unit 108 houses the housing rack 107 in the housing part 106.

The camera 70 is provided above or diagonally above the dipping bath 32 in the dipping bath arrangement part 33 inside the cover glass sticking device 90 in the same manner as the first embodiment. The camera 70 is connected to the image processing device 72, and the display unit 74 and the speaker 76 for notifying an operator of a determination result are connected to the image processing device 72 (see Fig. 4).

The operation in the camera 70 and the image processing device 72 is the same as the first embodiment.

That is, when the image processing device 72 determines that there is not the dipping bath 32 regarding the presence/absence of the dipping bath 32 in the dipping bath arrangement part 33 on the basis of image data taken by the camera 70, the image processing device 72 displays the absence of the dipping bath on the display unit 74 and outputs an alarm sound such as a beeping sound from the speaker 76.

Moreover, when the image processing device 72 determines that there is the lid 42 regarding the presence/absence of the lid 42 of the dipping bath 32 on the basis of image data taken by the camera 70, the image processing device 72 displays the presence of the lid on the display unit 74 and outputs the alarm sound such as the beeping sound from the speaker 76.

Moreover, when the image processing device 72 determines that there is not the basket receiver 66 regarding the presence/absence of the basket receiver 66 of the dipping bath 32 on the basis of image data taken by the camera 70, the image processing device 72 displays the absence of the basket receiver on the display unit 74 and outputs the alarm sound such as the beeping sound from the speaker 76.

Moreover, when the image processing device 72 determines that there is not the basket 21 regarding the presence/absence of the basket 21 in the dipping bath 32 on the basis of image data taken by the camera 70, the image processing device 72 displays the absence of the basket 21 on the display unit 74 and outputs the alarm sound such as the beeping sound from the speaker 76.

The image processing device 72 can determine the type of the basket on the basis of image data taken by the camera 70. The image processing device 72 displays the determined type on the display unit 74. It is also preferable that the type of the basket is notified by voice from the speaker 76.

Furthermore, the image processing device 72 determines whether the volume of the clearing agent stored in the dipping bath 32 is sufficient or not so that the specimen is not dried on the basis of image data taken by the camera 70. Specifically, the image processing device 72, when determining that a liquid level of the clearing agent in the dipping bath 32 is lower than a position set in advance, performs a display indicating that the volume of the clearing agent is not sufficient on the display unit 74 and outputs the alarm sound such as the beeping sound from the speaker 76.

The sound outputted from the speaker 76 is not limited to the alarm sound but may be voice synthesized in advance also in the present embodiment. However, the type of the basket is limited to the case of voice.

The function of notifying the operator of the condition concerning the dipping bath 32 may be provided in either the display unit 74 or the speaker 76.

## Claims

1. A cover slip sticking device (30) comprising:
a dipping bath (32) in which a clearing agent is stored and a basket (21) housing a plurality of slide glasses (22) to which specimens are attached is housed;
a dipping bath arrangement part in which the dipping bath (32) is arranged;
an imaging device (70) provided in the dipping bath arrangement part;
a notification unit (74, 76) notifying an operator of the presence/absence of the dipping bath (32) and the condition of the dipping bath (32) in the dipping bath arrangement part taken by the imaging device (70);
a basket receiver (66) arranged in such a manner as to protrude in an inward direction of the dipping bath (32) in the dipping bath (32) and for holding the basket (21) inside the dipping bath (32) even when the basket (21) is a different type; and
an image processing device (72) performing image processing of an image taken by the imaging device (70), wherein
the image processing device (72) determines as the condition of the dipping bath (32):
the presence/absence of a lid (42) of the dipping bath (32);
the presence/absence of the basket receiver (66) arranged in the dipping bath (32);
whether a liquid level of the clearing agent in the dipping bath (32) is lower than a position set in advance;
the presence/absence of the basket (21), ), wherein the image processing device determines
a type of a size of the basket (21) according to the difference in the number of slide glasses (22) inserted in the basket (21).

2. The cover slip sticking device (30) according to claim 1, wherein the notification unit (74, 76) includes a display unit (74) on which the presence/absence of the dipping bath (32) and the condition of the dipping bath (32) are displayed.

3. The cover slip sticking device (30) according to claim 1 or claim 2, wherein the notification unit (74, 76) includes a speaker (76) generating a notification sound or voice.

## Patentansprüche

1. Vorrichtung (30) zum Kleben eines Deckglases, umfassend:
ein Tauchbad (32), in dem ein Klärmittel aufbewahrt wird und in dem ein Korb (21) untergebracht ist, der eine Vielzahl von Objektträgern (22) aufnimmt, an denen Proben befestigt sind
einen Tauchbadanordnungsteil, in dem das Tauchbad (32) angeordnet ist;
eine Bildgebungsvorrichtung (70), die in dem Tauchbadanordnungsteil bereitgestellt ist;
eine Benachrichtigungseinheit (74, 76), die einen Bediener über das Vorhandensein/Nichtvorhandensein des Tauchbades (32) und den Zustand des Tauchbades (32) in dem von der Bildgebungsvorrichtung (70) aufgenommenen Tauchbadanordnungsteil benachrichtigt;
einen Korbempfänger (66), der so angeordnet ist, dass er in einer Einwärtsrichtung des Tauchbades (32) in das Tauchbad (32) hineinragt und den Korb (21) innerhalb des Tauchbades (32) hält, selbst wenn der Korb (21) ein anderer Typ ist; und
eine Bildverarbeitungsvorrichtung (72), die eine Bildverarbeitung eines von der Bildgebungsvorrichtung (70) aufgenommenen Bildes durchführt, wobei die Bildverarbeitungsvorrichtung (72) als den Zustand des Tauchbades (32) Folgendes bestimmt:
das Vorhandensein/Nichtvorhandensein eines Deckels (42) des Tauchbades (32);
das Vorhandensein/Nichtvorhandensein des im Tauchbad (32) angeordneten Korbempfängers (66);
ob ein Flüssigkeitsstand des Klärmittels im Tauchbad (32) niedriger ist als eine im Voraus eingestellte Position;
das Vorhandensein/Nichtvorhandensein des Korbes (21), wobei die Bildverarbeitungsvorrichtung einen Typ einer Größe des Korbes (21) gemäß dem Unterschied in der Anzahl der in den Korb (21) eingelegten Objektträger (22) bestimmt.

2. Vorrichtung (30) zum Kleben eines Deckglases nach Anspruch 1, wobei die Benachrichtigungseinheit (74, 76) eine Anzeigeeinheit (74) einschließt, auf der das Vorhandensein/Nichtvorhandensein des Tauchbades (32) und der Zustand des Tauchbades (32) angezeigt werden.

3. Vorrichtung (30) zum Kleben eines Deckglases nach Anspruch 1 oder Anspruch 2, wobei die Benachrichtigungseinheit (74, 76) einen Lautsprecher (76) einschließt, der einen Benachrichtigungston oder eine Benachrichtigungsstimme erzeugt.

## Revendications

1. Dispositif de collage de lamelles couvre-objets (30) comprenant :
un bain de trempage (32) dans lequel un agent de clarification est stocké et un panier (21) recevant une pluralité de lamelles de verre (22) auxquelles des spécimens sont fixés est reçu ;
une partie d'agencement de bain de trempage dans laquelle le bain de trempage (32) est agencé ;
un dispositif d'imagerie (70) fourni dans la partie d'agencement de bain de trempage ;
une unité de notification (74, 76) notifiant un opérateur de la présence/absence du bain de trempage (32) et de la condition du bain de trempage (32) dans la partie d'agencement de bain de trempage prise par le dispositif d'imagerie (70) ;
un dispositif de réception de panier (66) agencé de manière à faire saillie dans une direction vers l'intérieur du bain de trempage (32) dans le bain de trempage et destiné à tenir le panier (21) à l'intérieur du bain de trempage (32) même lorsque le panier (21) est d'un type différent ; et
un dispositif de traitement d'image (72) réalisant un traitement d'image d'une image prise par le dispositif d'imagerie (70), dans lequel
le dispositif de traitement d'image (72) détermine à titre de condition du bain de trempage (32) :
la présence/absence d'un couvercle (42) du bain de trempage (32) ;
la présence/absence du dispositif de réception de panier (66) agencé dans le bain de trempage (32) ;
le fait qu'un niveau de liquide de l'agent de clarification dans le bain de trempage (32) soit inférieur ou non à une position définie à l'avance ;
la présence/absence du panier (21), dans lequel le dispositif de traitement d'image détermine un type d'une taille du panier (21) selon la différence dans le nombre de lamelles de verre (22) insérées dans le panier (21).

2. Dispositif de collage de lamelles couvre-objets (30) selon la revendication 1, dans lequel l'unité de notification (74, 76) comprend une unité d'affichage (74) sur laquelle la présence/absence du bain de trempage (32) et la condition du bain de trempage (32) sont affichées.

3. Dispositif de collage de lamelles couvre-objets (30) selon la revendication 1 ou la revendication 2, dans lequel l'unité de notification (74, 76) comprend un haut-parleur (76) générant une notification vocale ou sonore.
